# EUROPEAN PATENT SPECIFICATION

(11) **EP 2 916 475 B1**
(45) Date of publication and mention of the grant of the patent: **14.06.2023**
(21) Application number: 15157860.6
(22) Date of filing: 05.03.2015
(51) Int. Cl.: H04J 14/02

(54) **N-degree CDC WSX ROADM**
N-GRAD CDC WSX ROADM
CDC WSX ROADM À DEGRÉ N

(30) Priority: 05.03.2014 US 201414198376
(43) Date of publication of application: 09.09.2015
(73) Proprietor: Oplink Communications, Inc, Fremont, CA 94538 (US)
(72) Inventor: Zhu, Tian, Castro Valley, CA 94552 (US); Liu, Kun, Sunnyvale, CA 94087 (US); Mao, Hongwei, Fremont, CA 94538 (US); Ji, Guijun, Cupertino, CA 95014 (US); Gong, Lifu, San Jose, CA 95129 (US)
(74) Representative: Blumbach · Zinngrebe Patentanwälte PartG mbB

(56) References cited:
- EP-A2- 1 628 424
- WO-A1-2004/008208
- WO-A2-03/076981
- US-A1- 2009 041 457
- US-A1- 2012 020 664
- US-B1- 6 532 090

## Description

### BACKGROUND

This specification relates to optical communications.

A conventional reconfigurable optical add-drop multiplexer (ROADM) is a form of optical add-drop multiplexer that additionally provides wavelength selective switching. This provides for particular wavelength channels to be added or dropped from a fiber as optical signals. ROADM's typically include a number of wavelength selective switches. A wavelength selective switch is a switch that enables optical signals with arbitrary wavelengths in, e.g., optical fibers, to be selectively switched from one optical fiber to another.

EP1 628 424 A2 describes a core unit arranged in a transmission path including a through path for causing an input signal to an input port to pass through to an output port, a drop-side port that drops the input signal having a predetermined wavelength, and an add-side port that adds channel having a predetermined wavelength to the input light.US 2009/041457 A1 describes a modular WSS-based Communications system with colorless and network-port transparent add/drop interfaces. According to certain aspects, equipment architecture is provided that enables a linear, ring, and mesh optical network. The embodiments are primarily on how to add and drop signals at a node of the network. The embodiments are based on the use a wavelength selective switch (WSS), which is an emerging component technology.

WO 03/076981 A2 describes an optical wavelength cross connect to receive multiple input optical signals that each have multiple spectral bands and to transmit multiple output optical signals that each have one or more of those spectral bands. The optical wavelength cross connect includes multiple wavelength routing elements, which are optical components that selectively route wavelength components between one optical signal and multiple optical signals in either direction according to a configurable state.

US 2012/020664 A1 describes a wavelength selective light cross connect device which is configured of a route selector including route selection elements, wavelength selector, route selector including route selection elements and controller. The route selection elements select routes for WDM signals of N channels inputted to input routes, and directs the WDM signals to the wavelength selector. The wavelength selector performs a selection operation to (N×M) WDM signals according to their wavelength, and outputs the signals. Wavelength selection elements receives different outputs obtained from the respective route selection elements via the wavelength selector, selects routes and outputs the signals from output routes.

US 6 532 090 B1 describes a wavelength division multiplex (WDM) cross-connect architecture that can selectively cross-connect, at a wavelength granularity, wavelength channels from any of a plurality of input WDM optical facilities (e.g., fibers) to any of a plurality of output WDM optical facilities. The architecture is based on multi-wavelength modules, which are capable of routing simultaneously N wavelengths. The number of required modules scales only with k2 or less (i.e., k2 modules with N complexity), where k is the number of input/output fibers. The significant reduction in complexity is traded for a decrease in blocking performance; one of the architectures is strictly non-blocking in the space domain and rearrangeably non-blocking in the wavelength domain, whereas two others are rearrangeably non-blocking in both the wavelength and space domain. Since the wavelength channels are optically multiplexed in the interconnection fibers, only a small number of optical amplifiers are needed to compensate for the inevitable transmission loss in the interconnection fabric.

WO 2004/008208 A1 describes a spectrally selective optical switch. The switch comprises a first and a second optical waveguide each having a light guiding structure arranged to guide light along a predetermined path, the optical waveguides being arranged adjacent and parallel to each other; an external resonator defined by a first and a second mirror, said first and said second mirror being provided on opposite sides and outside of said first and second light guiding structures, and said external resonator being resonant to a specific wavelength; and a deflector provided in each of said first and second optical waveguide, the deflectors being arranged to deflect light propagating in one of the light guiding structures to the other light guiding structure by operation of said external resonator. A matrix switch is also described.

In view of the aforementioned documents, the present application is based on the objective technical problem of efficiently adding and dropping signals to a cross-connect with 2x2 cross connects.

### SUMMARY

In general, one aspect of the subject matter described in this specification can be embodied in apparatuses that include N 1 × 2 ingress tap couplers, wherein a tapped branch of each ingress tap coupler is coupled to a degree drop and wherein N > 1; a wavelength blocker array having N wavelength blocking units, each wavelength blocking unit coupled to a corresponding one of the N 1 × 2 ingress tap couplers; N 2 × 1 egress tap couplers, wherein a tapped branch of each egress tap coupler is coupled to a degree add; and a wavelength selective cross-connect (WSX) array coupled between the wavelength blocker array and the N 2 × 1 egress tap couplers, wherein the WSX array comprises multiple independently switched 2x2 WSX switches. Other embodiments of this aspect include corresponding systems and methods.

These and other embodiments can each optionally include one or more of the following features. Each wavelength blocker unit includes an input port coupled to a corresponding ingress tap coupler and an output port coupled to an input port of a particular 2 × 2 WSX switch. Each WSX switch includes two input ports and two output ports and wherein each WSX switch is independently controllable to switch between a bar state and a cross state, each switch state determining which input ports are coupled to which output ports. Based on a particular switch setting for the WSX array, a wavelength channel input to a first 2x2 WSX switch of the WSX array is routed through a series of the 2x2 WSX switches to a specified egress tap coupler. The WSX array includes eight 2×2 WSX switches. The WSX array includes twenty-four 2x2 WSX switches. A same wavelength channel received from different ingress tap couplers are routed by the WSX array to different egress tap couplers concurrently. A wavelength channel input at a particular ingress tap coupler can be routed to a first egress tap coupler while the same wavelength channel can be added from a degree add port and routed to a second egress tap coupler.

Particular embodiments of the subject matter described in this specification can be implemented so as to realize one or more of the following advantages. A wavelength blocker array (WBA) implementation of a wavelength selective cross-connect (WSX) can be less expensive and less bulky than a conventional 1 × N wavelength selective switch based WSX. Additionally, a RO ADM using a WB A based WSX is less bulky. The WB A also makes it easier to design devices having a higher port count, which can drive down the cost, e.g., for ROADMs. A WBA based WSX is also able to provide broadcast and drop-and-continue functionality.

A 2 × 2 WSX array based N.K x N.K WSX allows for an N x N WSX to be configured with a simpler structure resulting in lower cost and smaller equipment spacing. The 2x2 WSX can be integrated as an array to save cost and space. In some implementations, a 2 × 2 WSX array based N.K x N.K WSX can be designed to provide drop-and-continue functionality. Alternatively, in some other implementations, a 2x2 WSX array based WSX can be designed to provide a colorless and directionless add/drop port that provides increased flexibility on add and drop locations.

A twin N × N CDC add/drop shuffle, not part of the present invention, has a shuffle has a wavelength selective function that can make multiple wavelength channels from different degrees combine to one drop port. A splitter can then be used to create more ports.

The N × N CDC add/drop shuffle, not part of the present invention,can also turn unidirectional N add/drop ports into N colorless directionless and contentionless (CDC) ports, additionally using a splitter can extend N CDC ports to X (X»N) CDC ports with very little cost. This can dramatically reduce the cost per CDC add/drop port.

The details of one or more embodiments of the subject matter of this specification are set forth in the accompanying drawings and the description below. Other features, aspects, and advantages of the subject matter will become apparent from the description, the drawings, and the claims The invention is set out in the independent claims. Preferred embodiments are defined by the dependent claims.

### BRIEF DESCRIPTION OF THE DRAWINGS

FIGS. 1A-B are block diagrams of an example N-degree CDC WSX ROADM.
FIG. 2A is a diagram of an example conventional N-degree WSX ROADM.
FIG. 2B is a diagram of the example N.K x N.K WSX of FIG. 2A
FIG. 2C is a diagram of the example twin N x M multicast switch of FIG. 2A.
FIG. 3A is a diagram of an example N.K x N.K WSX including a wavelength blocker array for better understanding of the invention, not part of the present invention.
FIG. 3B is a diagram of the example N.K x N.K WSX of FIG 3 A with additional wavelength channel routing for better understanding of the invention, not part of the present invention.
FIG. 4A is a diagram of an example 4.4 × 4.4 WSX using a 2x 2 WSX array.
FIG. 4B is a diagram showing an example of bar and cross states of a 2x2 WSX.
FIG. 4C is a diagram of an example 8.8 × 8.8 WSX using a 2 × 2 WSX array.
FIG. 4D is a diagram of the example 4.4 × 4.4 WSX of FIG. 4A including example path routing.
FIG. 4E is a diagram of the example 4.4 × 4.4 WSX of FIG. 4A including example path routing.
FIG. 4F is a diagram of the example 4.4 × 4.4 WSX of FIG. 4A including example path routing.

Like reference numbers and designations in the various drawings indicate like elements.

### DETAILED DESCRIPTION

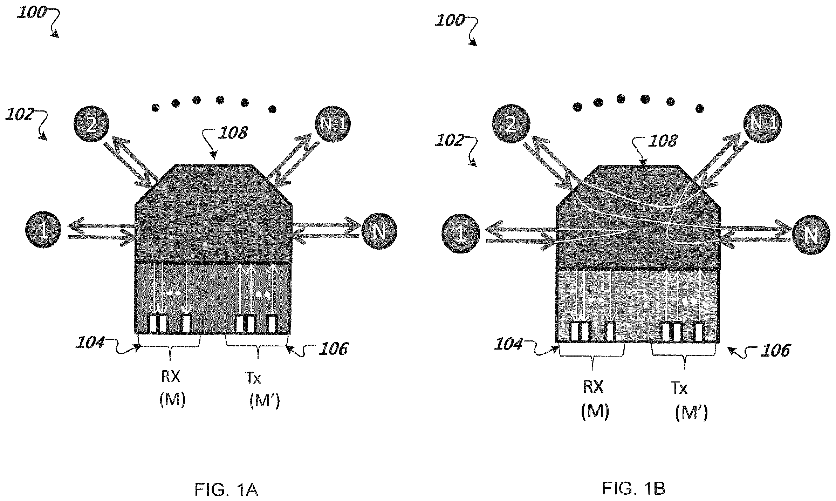

FIGS. 1A-B are block diagrams of an example N-degree colorless directionless contention (CDC) wavelength selective cross-connect (WSX) RO ADM 100. The N-degree CDC WSX RO ADM 100 includes N pairs of ingress and egress fibers 102 that are selectively linked together. Each pair of linked fibers is one degree. Linking a particular ingress fiber to a particular egress fiber is provided by the WSX. Each fiber can include multiple channels for optical signals. Each channel has a specific wavelength.

There are M channels of optical signal that can be dropped off from one or more ingress fibers 102 and can be converted to an electrical signal through receivers 104. Additionally, an electrical signal can be input through transmitters 106 and converted to M' channels of optical signal that can be added to one or more of the egress fibers 102.

In operation, the optical signal from any wavelength channel input through any ingress fiber can be non-blocking switched to any of the egress fiber ports using a WSX 108. Additionally, the optical signal of any wavelength channel input through any ingress fiber can be selectively dropped to one location, e.g., one or more receivers 104. Similarly, an optical signal of a particular wavelength channel input through one or more transmitters 106 can be added to a selected egress fiber. Therefore, the adding and dropping provided by the CDC WSX RO ADM 100 is colorless and directionless. Additionally, the adding or dropping of a particular wavelength channel from one optical fiber does not block the adding or dropping of wavelength channels from the other optical fibers. Thus, the CDC WSX RO ADM 100 is also contentionless.

The CDC WSX RO ADM 100 has three main portions: the WSX 108, which links among degrees, e.g., particular ingress fibers to particular egress fibers 102; add/drop links among ingress/egress fibers to drop/add ports; and the transmitter/receiver 106/108 that converts signals between optical and electrical states. Each of these portions is described in greater detail below with respect to particular implementations.

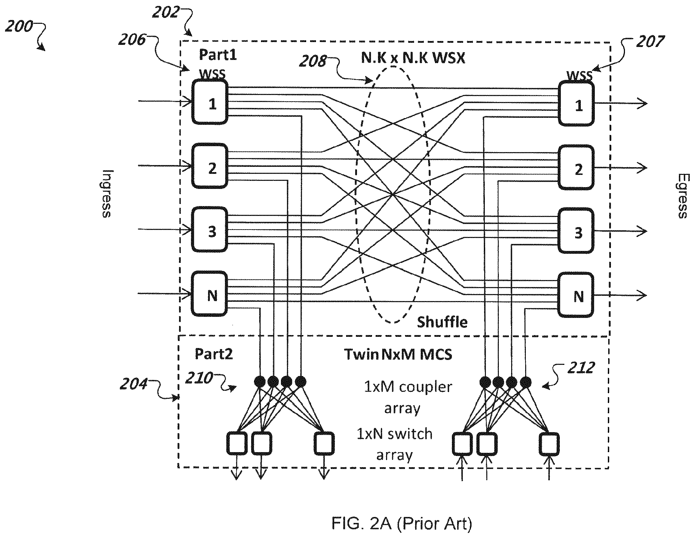

FIG. 2A is a diagram of an example conventional N-degree WSX RO ADM 200. The N-degree WSX RO ADM 200 includes a first part, which is an N.K x N.K WSX 202. The N.K x N.K WSX 202 has N degrees and K add/drop pairs. In some implementations, K = L x N where L is a natural number. The N.K x N.K WSX 202 includes 2N units of 1 x n wavelengths selective switches (WSS) 206/207, an N² x N² fiber shuffle 208 that crossconnects ports of the N ingress WSS's 206 with ports of the N egress WSS's 207; and a twin LN x LN fiber shuffle when L > 1 that couples (L) ports of each ingress WSS 206 to L degree drop groups and couples (L) ports of each egress WSS 207 to L degree add groups. J.

The N-degree WSX RO ADM 200 also includes a second part, which is a twin N x M multi-cast switch (MCS) 204 where N is the number of degrees and M is the number of add/drop pairs. The twin N x M MCS 204 includes two separate N x M MCS, a first N x M MCS 210 for drop and a second N x M MCS 212 for add. Each N x M MCS includes N units of 1 x M splitters, M units of 1 x N switch, and an NM x NM fiber shuffle to cross-connect the splitters and switches.

Acting in combination, each add/drop group from the N.K x N.K WSX 202 is linked to one of the twin N x M MCS 204 to provide M CDC add/drop so that the N-degree WSX RO ADM 200 can support N degree wavelength selective cross-connect and L x M channel CDC add/drop.

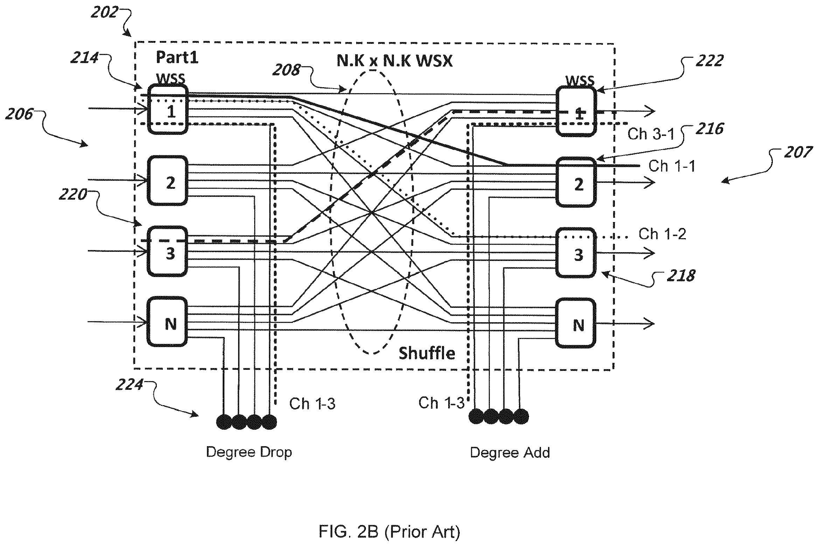

FIG. 2B is a diagram of the example N.K x N.K WSX 202 of FIG. 2A. In particular, FIG. 2B illustrates example paths for wavelength channels through the N.K x N.K WSX 202. Each ingress WSS 206 includes a common port and n branch ports where n = N + L. Any wavelength channel from the common port can be switched to any one of the n branch ports. The N optical branches of each ingress WSS 206 are used to form the WSX and the remaining L optical branches of each ingress WSS 206 are for dropping wavelength channels. Similarly, each egress WSS 207 includes n optical branch ports where n = N + L. The N optical branches of each egress WSS 207 are also used to form the WSX and the remaining L optical branch ports of each egress WSS 207 are for adding wavelength channels. With the N x N fiber shuffle providing cross-connections, each of N branch port of each ingress WSS 206 is linked to one ofN branch port of each egress WSS 207.

In operation, an optical signal having multiple wavelength channels enters the first ingress WSS 214. The channel can be switched to a particular egress port of an egress WSS 207 and can exit the WSX 202 through a common port of the egress WSS. In particular, FIG. 2B shows the wavelength channel 1-1 being switched to a second egress WSS 216.

Similarly, another wavelength channel from the first ingress WSS 214, wavelength channel 1-2, can be switched to the same or a different egress port. In particular, the example shown in FIG. 2B shows the wavelength channel 1-2 being switched to a third egress WSS 218.

The same wavelength channel as wavelength channel 1-1 received at the first ingress WSS 214 can also be received at another ingress WSS 206. In particular, the example shown in FIG. 2B shows wavelength channel 3-1 received at the third ingress WSS 220 and switched to a first egress WSS 222.

Additionally, a wavelength channel from a particular port of an ingress WSS 206 can be switched to drop. That same wavelength channel can be added from an add port and switched to a particular port of an egress WSS 207. In particular, the example shown in FIG. 2B shows wavelength channel 1-3 received at the first ingress WSS 214 routed to drop 224. This same wavelength channel is then added and routed to the first egress WSS 222.

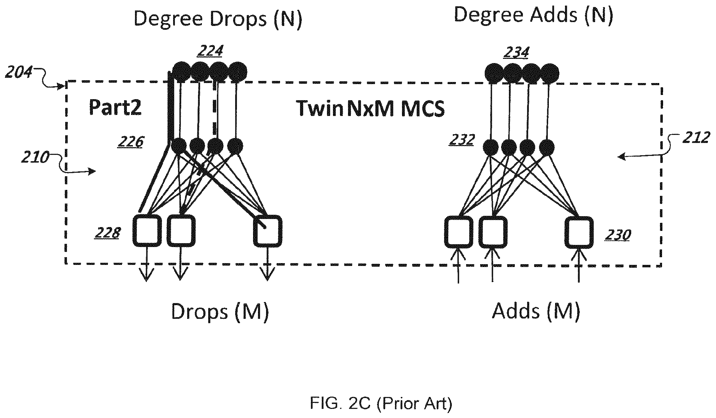

FIG. 2C is a diagram of the example twin Nx M MCS 204 of FIG. 2A. The twin N x M MCS 204 includes two separate N x M MCS's. a first N x M MCS 210 for drop and a second N x M MCS 212 for add. Each N x M MCS includes N units of 1 x M splitters, M units of 1 x N switch, and an NM x NM fiber shuffle to cross connect the splitters and the switches.

For each N degree drop 224, there are one or more wavelength channels M. A wavelength channel from a degree drop 224 is distributed to each switch 228 by a splitter 226. In some implementations, a particular drop port can be identified and the switch is linked to that drop port. Another wavelength channel from the same degree drop can also be received and switched to drop to another drop port. Additionally, another wavelength channel with the same wavelength but different degree drop can be linked to a switch that directs the wavelength channel to a different drop port.

In reverse, a wavelength channel added from a particular add port to a switch 230 can be routed to a specified coupler 232 and on to a particular degree add 234. Similarly, a wavelength channel with the same wavelength can be routed to a different degree add. Each degree add can receive zero or multiple wavelength channels depending on the switching state.

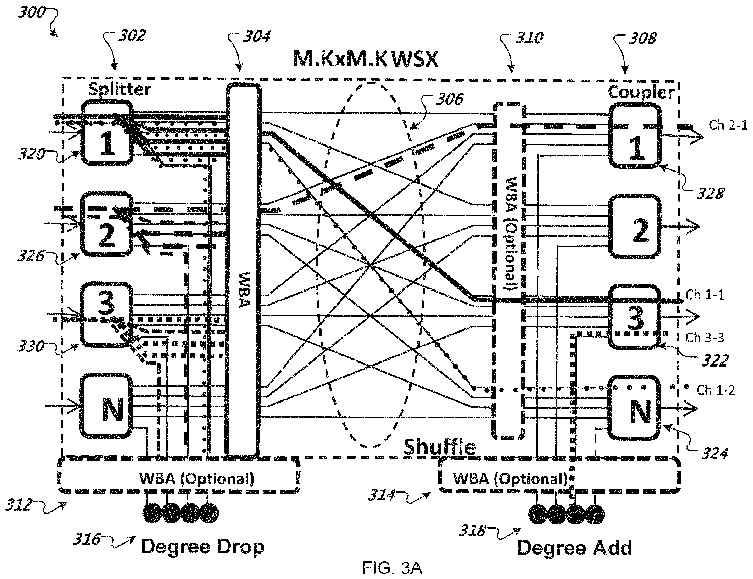

FIG. 3 A is a diagram of an example N.K x N.K WSX 300 for better understanding of the invention, not part of the present invention. The N.K x N.K WSX 300 includes N units of 1 x n splitters 302 on the ingress side where n = N + 1. The first N branches of each splitter 302 are designated for wavelength cross-connect providing a total of N² ingress branches. One additional branch from each splitter 302 is designated for degree drop. Thus, there are N total drop branches from the N splitters 302.

The N.K x N.K WSX 300 also includes a wavelength blocker array (WBA) 304. The WB A 304 includes two or more wavelength blocker units, each operating independently. Each wavelength blocker unit includes at least one input port and an output port. In some implementations, an input port of each wavelength blocker unit is coupled to drop branches of the N units of 1 x n splitters. There can be one or more wavelength channels received in input and each wavelength can be set as open, attenuated, or blocked by the particular wavelength blocker. The wavelength blocker is used to demultiplex the input signals, attenuate each signal independently at a value, then re-multiplex them into output signal. The attenuation of each wavelength channel can vary between two extreme statuses, one is called "pass" when the attenuation ratio is set as minimum value, the other is called block when is set as maximum value. The WBA 304 includes N(n) wavelength blocker units where n > N. In some implementations, n = N such that the WBA 304 includes N² wavelength blocker units where each wavelength blocker unit has an input port corresponding to an ingress branch of a particular splitter 302.

On the egress side, the N.K x N.K WSX 300 also includes N units of n x 1 combiners 308 where n = N + 1. The first N branches of each coupler 308 are designated for wavelength cross-connect providing a total of N² egress branches. One additional branch from each coupler 308 is designated for providing a degree add. Thus, each combiner 308 has N total branches. The branches from each combiner 308 can be combined to a single output port. The N.K x N.K WSX 300 also includes a N² x N² fiber shuffle 306. The fiber shuffle 306 provides cross-connect between the N² ingress branches, by way of the N² outputs of the WBA 304, and the N egress branches such that each branch of an ingress splitter 302 is linked to a branch of each egress combiner 308. In some alternative implementations, the fiber shuffle is an M x M' fiber shuffle where one or more ofMorM' may be equal to N² or may be some other suitable value. The remaining description of the WSX 300 is similarly applicable to an M x M' fiber shuffle implementation.

In some implementations, a second WBA 310 is also included in the N.K x N.K WSX 300 between the N² x N² fiber shuffle 306 and the egress couplers 308. This can provide additional wavelength channel filtering or attenuation. Additionally, in some other implementations, one or more additional WB As 3 12 or 314 can be included. In particular, the WBA 312 is positioned between the WSX 300 and the degree drop 316 and the WBA 314 can be positioned between the WSX 300 and the degree add 318. In some implementations, the first WBA 304 includes an input port coupled to the drop branches of the N units of 1 x n splitters and the second WBA 310 is coupled to the add branches of the N units of n x 1 combiners.

Moreover, in some alternative implementations, a single WBA can be positioned either as WBA 304 or WBA 310. That is, a single WBA can be positioned on either side of the N² x N² fiber shuffle 306. The WBA can perform the same functions regardless of which side of the N² x N² fiber shuffle 306 it is placed.

In operation, there are one or more wavelength channels received at respective ingress ports of the splitters 302. A wavelength channel from an ingress is split and distributed to N branches. Each of the N branches of the ingress is input to the WBA 304. Based on the specified cross-connect route for the wavelength channel, the particular WB unit will set the wavelength channel open and let it pass while the other WB's for the split branches will block the wavelength channel from output. The optical signal for the passed wavelength channel is routed by the fiber shuffle 306 to a particular egress combiner 308 and from there to an egress port.

For example, a wavelength channel (ch. 1-1) received at a first splitter 320 of the splitters 302 is separated into N branches, each passed to the WBA 304. A passed signal from a particular WB unit of the WBA 304 can be routed, in this example, to a third coupler 322 of the egress couplers 308. In another example, a different wavelength channel (ch. 1-2) received at the first splitter 320 can be passed by a different WB of the WBA 304 and routed, in this example, to a fourth coupler 324.

In another example, a same wavelength channel as the wavelength channel 1-1 can be received at a second splitter 326 (ch. 2-1). Although it has the same wavelength, it is routed to different wavelength blockers of the WBA 304 and therefore can be routed to a different egress port. In this example, the passed signal of ch. 2-1 is routed to a first coupler 328.

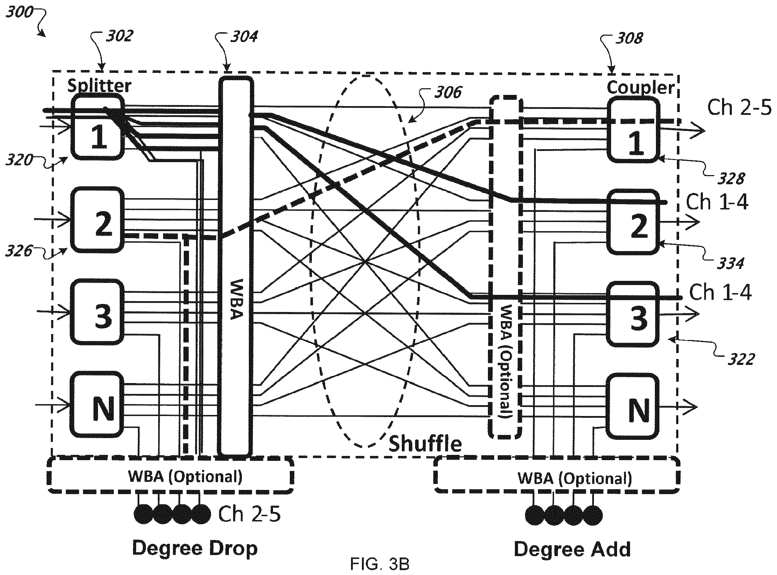

Furthermore, a wavelength channel from an ingress port is also split to a drop branch and routed to its corresponding degree drop port. In some implementations, the wavelength channel is blocked by all WB's of the WBA 304. For the example shown in FIG. 3, a wavelength channel (ch. 3-3) received at a third splitter 330 is blocked by the WBA 304 and dropped at its degree drop port. The same wavelength channel can optionally be added from a specified degree add port and routed to a corresponding egress coupler 308, which in the example shown is the third coupler 322.

FIG. 3B is a diagram of the example N.K x N.K WSX 300 of FIG 3 A with additional wavelength channel routing for better understanding of the invention, not part of the present invention. In particular, the N.K x N.K WSX 300 can be used to provide broadcast functionality. In particular, a wavelength channel received at a particular ingress splitter 302 can be broadcast to two or more egress ports. The WBA 304 can include two or more open wavelength blockers for the branches received from the particular splitter. Consequently, the optical signal for the wavelength channel can be routed to two more couplers 308.

Specifically, as shown in FIG. 3B, a wavelength channel (ch. 1-4) received at the first splitter is passed by more than one wavelength blocker in the WBA 304. Each passing wavelength blocker routes the passed optical signal through the fiber shuffle 306 to a different coupler 308, namely a second coupler 334 and the third coupler 322. Therefore, the wavelength channel is broadcast from the first ingress port to two egress ports.

The N.K x N.K WSX 300 can also provide drop and continue functionality. In particular, a wavelength channel received at a particular ingress splitter 302 can be passed by one or more wavelength blockers in the WB A 304 while also being dropped to a degree drop port. For example, as shown in FIG. 3B, a wavelength channel (ch-2-5) received at the second splitter 326 is routed by a drop branch to the degree drop port as well as passed by the WBA 304 to the first coupler 328.

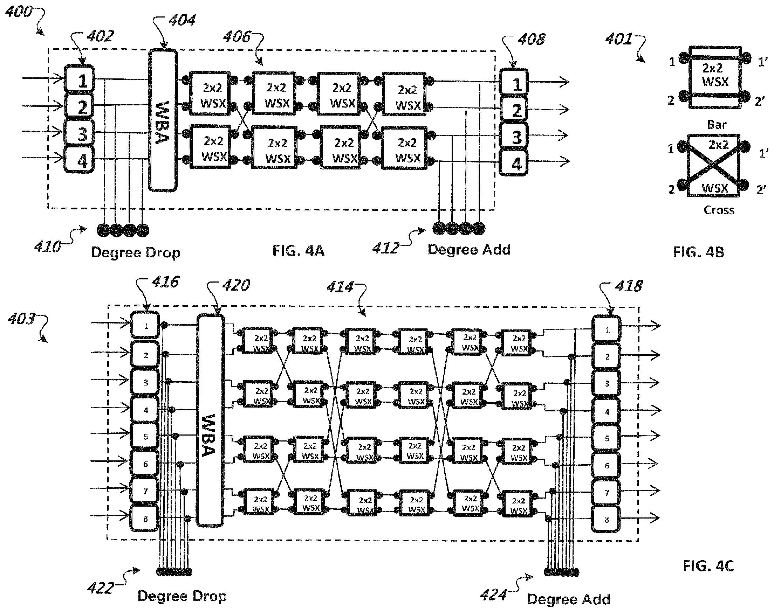

FIG. 4A is a diagram of an example 4.4 × 4.4 WSX 400 using a 2 × 2 WSX array 406. The WSX 400 includes four 1 × 2 tap couplers 402 on an ingress side, four 2 × 1 tap couplers 408 on an egress side, a wavelength blocker array (WBA) 404, and the WSX array 406. Each of the tap couplers 402 includes an input for receiving a signal and a tapped output. The tapped portion of the output is routed to a port of a degree drop 410. Each of the tap couplers 408 combines an input from the WSX array 406 and an input from a particular port of a degree add 412, and provide the combined signal as an output. The WBA 404 functions similarly to that of the WBA 304 in FIGS. 3A-B. In the example shown in FIG. 4A, the WBA 304 includes four units of wavelength blockers, one for each ingress tap coupler 402.

The WSX array 406 includes eight 2x2 WSX's, each controlled independently. Each 2x2 WSX has two input ports and two output ports. Each 2x2 WSX can be independently controlled to be in either a bar state or a cross state.

FIG. 4B is a diagram showing an example of bar and cross states of a 2x2 WSX 401. In the bar state of the 2x2 WSX 401, input from a first port 1 is routed to a first output port 1 ' and input from a second port 2 is routed to a second output port 2'. However, in the cross state of the 2x2 WSX 401, input from the first port 1 is routed to the second output port 2' and input from the second port 2 is routed to the first output port 1 '.

FIG. 4C is a diagram of an example 8.8 × 8.8 WSX 403 using a 2 × 2 WSX array 414, The WSX 403 is similar to the WSX 400 but scaled up in size. In particular, the WSX 403 includes eight 1 × 2 tap couplers 416 on an ingress side, eight 2 × 1 tap couplers 418 on an egress side, a wavelength blocker array (WBA) 420, and the WSX array 414. Each of the tap couplers 416 includes an input for receiving a signal and a tapped output. The tapped portion of the output is routed to a port of a degree drop 422. Each of the tap couplers 418 combines an input from the WSX array 414 and an input from a particular port of a degree add 424, and provide the combined signal as an output. The WSX array 414 includes twenty-four 2 × 2 WSX's, each controlled independently. Each 2x2 WSX has two input ports and two output ports. Each 2x2 WSX can be independently controlled to be in either a bar state or a cross state.

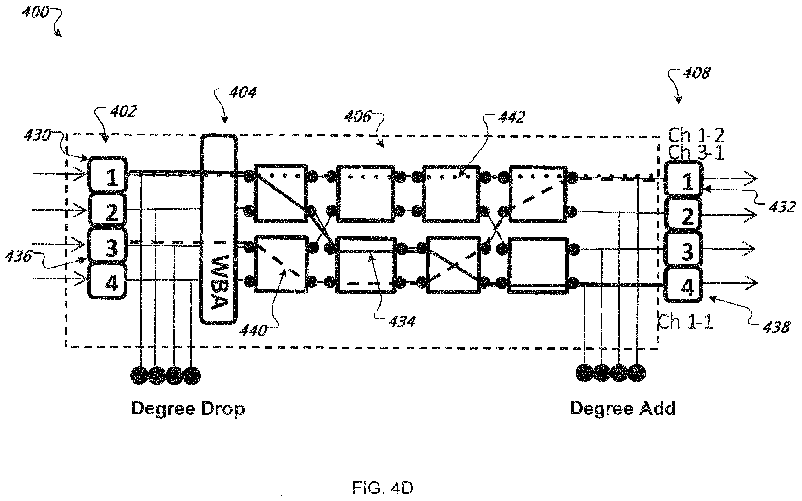

FIG. 4D is a diagram of the example 4.4 × 4.4 WSX of FIG. 4A including example path routing. Each ingress port to the tap couplers 402 can receive one or more wavelength channels. In one example, a wavelength channel received at a first ingress tap coupler 430 (ch. 1-1) is tapped a portion to the degree drop while the remaining passes to the WB A 404. If the wavelength channel is open for the corresponding wavelength blocker, the wavelength channel passes through a series of 2 × 2 WSX having switch settings, e.g., bar or cross states, that route the wavelength channel to the specified egress port at the first egress tap coupler 432. In particular, the path is illustrated by solid line 434 showing that the wavelength channel passes through four 2x2 WSX's for a particular switch setting of the WSX array 406, e.g., a particular combination of bar and cross states specified for WSX switches.

In another example, another wavelength channel having the same wavelength enters through an ingress port at a third ingress tap coupler 436 (ch. 3-1). This wavelength channel is switched to a different egress port at a fourth egress tap coupler 438 using the 2 × 2 WSX array 406 in the same switch setting. The path of the wavelength channel is shown by the dashed line 440.

Another wavelength channel received at the first ingress tap coupler 430 (ch. 1-2) can be switched to the same egress port as ch. 1-1 or can be routed to a different egress port according to a different switch setting. As shown in FIG. 4D, the dotted path 442 shows a second switch setting in which ch. 1-2 is routed to the first egress tap coupler 432.

Thus, each wavelength channel can be set as a bar or cross state independently such that different wavelengths from one ingress can have different settings. However, a same wavelength from two input ports of a 2 × 2 WSX have to have the same switching state, either both bar or both cross.

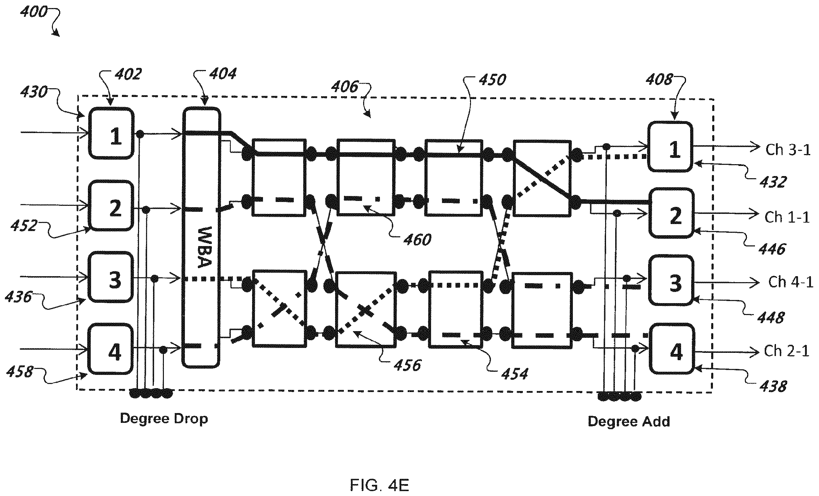

FIG. 4E is a diagram of the example 4.4 × 4.4 WSX 400 of FIG. 4A including example path routing. In particular, FIG. 4E illustrates a non-blocking switch in which one switching setting allows a same wavelength from different ingress ports to different egress ports concurrently. In FIG. 4E a wavelength channel (Ch. 1-1) is input at the first ingress tap coupler 430 and routed to the second egress tap coupler 446, as illustrated by path 450. The same wavelength channel input at the second ingress tap coupler 452 (Ch. 2-1) is routed to the fourth egress tap coupler 438, as illustrated by path 454. The same wavelength channel input at the third ingress tap coupler 436 (Ch. 3-1) is routed to the first egress tap coupler 432, as illustrated by path 456. Finally, the wavelength channel input at a fourth ingress tap coupler 458 (Ch. 4-1) is routed to the third egress tap coupler 448, as illustrated by path 460.

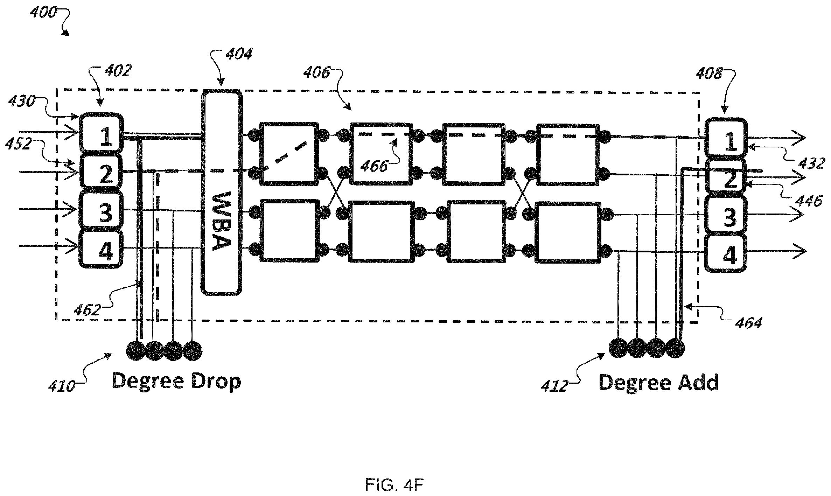

FIG. 4F is a diagram of the example 4.4 × 4.4 WSX 400 of FIG. 4A including example path routing. In particular, FIG. 4F shows an example of add/drop functionality in the WSX 400. In some implementations, a wavelength channel input at a particular ingress tap coupler has a portion of the signal tapped to a port of the degree drop 410. The wavelength channel can then be blocked by the WBA 404 or can be passed by the WBA 404 to provide drop-and-continue. As shown in FIG. 4F, a wavelength channel is received at the first ingress tap coupler 430 (Ch. 1-1). As illustrated by solid path 462, a portion is tapped to the degree drop 410 while the remaining signal of the wavelength channel is blocked by the WBA 404. Additionally, however, the wavelength channel is input from a port of the degree add 412 and routed to the second egress tap coupler 446, as shown by the solid path 464. Thus, the wavelength channel is dropped and then added again.

Additionally, FIG. 4F illustrates the drop-and-continue. A wavelength channel input at the second input tap coupler 452 (Ch. 2-1) has a portion tapped to the degree drop 410. At the same time, the WBA 404 allows the wavelength channel to pass through the WSX array 406 to the first egress tap coupler 432. The path through the switch setting of the WSX array 406 is shown by dotted line 466.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. An apparatus (400) comprising:
a wavelength selective cross-connect array (406, 414) comprising a plurality of independently switched 2 × 2 wavelength selective cross-connect switches,
**characterized in that** the apparatus further comprises:
N 1 × 2 ingress tap couplers (402), wherein a tapped branch of each ingress tap coupler is coupled to a degree drop (410) and wherein N > 1;
a wavelength blocker array (404) having N wavelength blocking units, each wavelength blocking unit coupled to a corresponding one of the N 1 × 2 ingress tap couplers;
N 2 × 1 egress tap couplers (408), wherein a tapped branch of each egress tap coupler is coupled to a degree add (412);
wherein the wavelength selective cross-connect array (406, 414) is coupled between the wavelength blocker array (404) and the N 2 × 1 egress tap couplers (408).

2. The apparatus of claim 1, wherein each wavelength blocker unit includes an input port coupled to a corresponding ingress tap coupler and an output port coupled to an input port of a particular 2 × 2 wavelength selective cross-connect switch.

3. The apparatus of claim 1, wherein each wavelength selective cross-connect switch includes two input ports and two output ports and wherein each wavelength selective cross-connect switch is independently controllable to switch between a bar state and a cross state, each switch state determining which input ports are coupled to which output ports.

4. The apparatus of claim 1, wherein based on a particular switch setting for the wavelength selective cross-connect array, a wavelength channel input to a first 2 × 2 wavelength selective cross-connect switch of the wavelength selective cross-connect array is routed through a series of the 2 × 2 wavelength selective cross-connect switches to a specified egress tap coupler.

5. The apparatus of claim 1, wherein the wavelength selective cross-connect array includes eight 2 × 2 wavelength selective cross-connect switches.

6. The apparatus of claim 1, wherein the wavelength selective cross-connect array includes twenty-four 2 × 2 wavelength selective cross-connect switches.

7. The apparatus of claim 1, wherein a same wavelength channel received from different ingress tap couplers are routed by the wavelength selective cross-connect array to different egress tap couplers concurrently.

8. The apparatus of claim 1, wherein a wavelength channel input at a particular ingress tap coupler can be routed to a first egress tap coupler while the same wavelength channel can be added from a degree add port and routed to a second egress tap coupler.

## Patentansprüche

1. Einrichtung (400), umfassend:
eine selektive Wellenlängenquerverbindungsanordnung (406, 414), die eine Vielzahl von unabhängig geschalteten selektiven 2 × 2 Wellenlängenquerverbindungsschaltern umfasst,
**dadurch gekennzeichnet, dass** die Einrichtung weiter umfasst:
N 1 × 2 Eintrittsabzweigkoppler (402), wobei eine angezapfte Verzweigung jedes Eintrittsabzweigkopplers mit einem Stufen-Drop (410) gekoppelt ist und wobei N > 1;
eine Wellenlängenblockeranordnung (404), die N Wellenlängenblockiereinheiten aufweist, wobei jede Wellenlängenblockiereinheit mit einer entsprechenden der N 1 × 2 Eintrittsabzweigkoppler gekoppelt ist;
N 2 × 1 Austrittsabzweigkoppler (408), wobei eine angezapfte Verzweigung jedes Austrittsabzweigkopplers mit einem Stufen-Add (412) gekoppelt ist;
wobei die selektive Wellenlängenquerverbindungsanordnung (406, 414) zwischen der Wellenlängenblockeranordnung (404) und den N 2 × 1 Austrittsabzweigkopplern (408) gekoppelt ist.

2. Einrichtung nach Anspruch 1, wobei die Wellenlängenblockereinheit einen Eingangsanschluss, der mit einem entsprechenden Eintrittsabzweigkoppler gekoppelt ist, und einen Ausgangsanschluss umfasst, der mit einem Eingangsanschluss eines bestimmten selektiven 2 × 2 Wellenlängenquerverbindungsschalters gekoppelt ist.

3. Einrichtung nach Anspruch 1, wobei jeder selektive Wellenlängenquerverbindungsschalter zwei Eingangsanschlüsse und zwei Ausgangsanschlüsse enthält und wobei jeder selektive Wellenlängenquerverbindungsschalter zum Schalten zwischen einem Sperrzustand und einem Durchgangszustand unabhängig steuerbar ist, wobei jeder Schaltzustand bestimmt, welche Eingangsanschlüsse mit welchen Ausgangsanschlüssen gekoppelt werden.

4. Einrichtung nach Anspruch 1, wobei basierend auf einer bestimmten Schaltereinstellung für die selektive Wellenlängenquerverbindungsanordnung ein Wellenlängenkanaleingang in einen ersten selektiven 2 × 2 Wellenlängenquerverbindungsschalter der selektiven Wellenlängenquerverbindungsanordnung durch eine Reihe der selektiven 2 × 2 Wellenlängenquerverbindungsschalter zu einem spezifizierten Austrittsabzweigkoppler geleitet wird.

5. Einrichtung nach Anspruch 1, wobei die selektive Wellenlängenquerverbindungsanordnung acht selektive 2 × 2 Wellenlängenquerverbindungsschalter enthält.

6. Einrichtung nach Anspruch 1, wobei die selektive Wellenlängenquerverbindungsanordnung vierundzwanzig selektive 2 × 2 Wellenlängenquerverbindungsschalter enthält.

7. Einrichtung nach Anspruch 1, wobei ein gleicher Wellenlängenkanal, der von unterschiedlichen Eintrittsabzweigkopplern empfangen wird, von der selektiven Wellenlängenquerverbindungsanordnungen gleichzeitig zu unterschiedlichen Austrittsabzweigkopplern geleitet werden.

8. Einrichtung nach Anspruch 1, wobei ein Wellenlängenkanaleingang an einem bestimmten Eintrittsabzweigkoppler zu einem ersten Austrittsabzweigkoppler geleitet werden kann, während der gleiche Wellenlängenkanal zu einem Stufen-Add-Anschluss addiert werden kann und zu einem zweiten Austrittsabzweigkoppler geleitet werden.

## Revendications

1. Appareil (400) comprenant :
un réseau de connexion transversale sélectif de longueur d'onde (406, 414) comprenant une pluralité de commutateurs de connexion transversale 2 × 2 à longueur d'onde sélective indépendamment commutés,
**caractérisé en ce que** l'appareil comprend en outre :
N 1 × 2 coupleurs de prise de réglage d'entrée (402), dans lequel une branche à prises de chaque coupleur de prise de réglage d'entrée est couplée à une chute de degré (410) et dans lequel N > 1 ;
un réseau de bloqueur de longueur d'onde (404) présentant N unités de blocage de longueur d'onde, chaque unité de blocage de longueur d'onde étant couplée à un correspondant des N 1 × 2 coupleurs de prise de réglage d'entrée :
N 2 × 1 coupleurs de prise de réglage de sortie (408), dans lequel une branche à prises de chaque coupleur de prise de réglage de sortie est couplée à un ajout de degré (412) ;
dans lequel le réseau de connexion transversale de longueur d'onde sélectif (406. 414) est couplé entre le réseau de bloqueur de longueur d'onde (404) et les N 2 × 1 coupleurs de prise de réglage de sortie (408).

2. Appareil selon la revendication 1, dans lequel chaque unité de bloqueur de longueur d'onde inclut un orifice d'entrée couplé à un coupleur de prise de réglage d'entrée correspondant et un orifice de sortie couplé à un orifice d'entrée d'un commutateur de connexion transversale 2 × 2 de longueur d'onde sélective particulier.

3. Appareil selon la revendication 1, dans lequel chaque commutateur de connexion transversale de longueur d'onde sélective inclut deux orifices d'entrée et deux orifices de sortie et dans lequel chaque commutateur de connexion transversale de longueur d'onde sélective est commandable indépendamment pour commuter entre un état droit et un état transversal, chaque état de commutation déterminant quels orifices d'entrées sont couplés à quels orifices de sortie.

4. Appareil selon la revendication 1, dans lequel sur la base d'un réglage de commutation particulier pour le réseau de connexion transversale de longueur d'onde sélective, une entrée de canal de longueur d'onde à un premier commutateur de connexion transversale 2 × 2 de longueur d'onde du réseau de connexion transversale de longueur d'onde sélective est routé à travers une série des commutateurs de connexion transversale 2 × 2 de longueur d'onde sélective à un coupleur de prise de réglage de sortie spécifié.

5. Appareil selon la revendication 1, dans lequel le réseau de connexion transversale de longueur d'onde sélective inclut huit commutateurs de connexion transversale 2 × 2 de longueur d'onde sélective.

6. Appareil selon la revendication 1, dans lequel le réseau de connexion transversale de longueur d'onde sélective inclut vingt-quatre commutateurs de connexion transversale 2 × 2 de longueur d'onde sélective.

7. Appareil selon la revendication 1, dans lequel un même canal de longueur d'onde reçu par différents coupleurs de prise de réglage d'entrée sont routés par le réseau de connexion transversale de longueur d'onde sélective à différents coupleurs de prise de réglage de sortie simultanément.

8. Appareil selon la revendication 1, dans lequel une entrée de canal de longueur d'onde à un coupleur de prise de réglage d'entrée particulier peut être routée à un premier coupleur de prise de réglage de sortie alors que le même canal de longueur d'onde peut être ajouté depuis un orifice d'ajout de degré et routé à un second coupleur de prise de réglage de sortie.
